# EUROPÄISCHE PATENTSCHRIFT

(11) **EP 2 358 565 B1**
(45) Veröffentlichungstag und Bekanntmachung des Hinweises auf die Patenterteilung: **24.10.2012**
(21) Anmeldenummer: 09760720.4
(22) Anmeldetag: 05.11.2009
(51) Int. Cl.: B60R 13/08, B62D 1/16, B62D 5/04

(54) **LENKSYSTEM MIT GERÄUSCHDÄMMENDEN KOMPONENTEN AUS VERBUNDWERKSTOFF**
STEERING SYSTEM HAVING NOISE-REDUCING COMPONENTS MADE OF COMPOSITE MATERIAL
SYSTÈME DE DIRECTION MUNI DE COMPOSANTS D'INSONORISATION EN MATÉRIAU COMPOSITE

(30) Priorität: 19.12.2008 DE 102008063712
(43) Veröffentlichungstag der Anmeldung: 24.08.2011
(73) Patentinhaber: ThyssenKrupp Presta AG, 9492 Eschen (LI)
(72) Erfinder: KLUKOWSKI, Christoph, FL-9487 Gamprin (LI); MEYER, Martin, CH-9450 Altstätten (CH)
(74) Vertreter: Lenzing Gerber Stute
(86) Internationale Anmeldenummer: PCT/EP2009/007942
(87) Internationale Veröffentlichungsnummer: WO 2010/069434

(56) Entgegenhaltungen:
- US-A1- 2006 134 450
- US-A1- 2007 205 041

## Beschreibung

Die vorliegende Erfindung betrifft ein Lenksystem mit den Merkmalen des Oberbegriffs des Anspruchs 1.

Lenksysteme und insbesondere Lenkungen mit elektromotorischer Servounterstützung weisen eine Vielzahl von möglichen Geräuschquellen auf. Dies sind zum Beispiel die mechanischen Einflüsse der gelenkten Räder, die über Spurstangen in die Lenkung eingetragen werden. Weiter ist der mechanische Eingriff zwischen dem drehbaren Teil der Lenkung und der Zahnstange oder einem anderen Verbindungsglied zu den Spurstangen eine Geräuschquelle. Ein elektrischer Servoantrieb mit einem Untersetzungsgetriebe ist eine weitere potentielle Geräuschquelle. Besonders negativ fallen solche Geräusche bei Kraftfahrzeugen auf, deren Innenraum besonders gut gedämmt ist und die deshalb im Betrieb leise sind. Die zu erwartende Zunahme von Hybridfahrzeugen und Fahrzeugen mit elektrischem Antrieb lässt erwarten, dass das Geräuschniveau im Innenraum durch den teilweisen oder vollständigen Wegfall der Motorgeräusche eines Verbrennungsmotors abermals sinkt.

Vor diesem Hintergrund ist es angestrebt, andere Geräuschquellen zu dämmen und/oder zu dämpfen. Dies betrifft auch die Lenkung, und insbesondere die elektromechanische Servolenkung, weil der Griff zum elektromotorischen Antrieb ein Geräuschspektrum erzeugt, das für den Benutzer des Kraftfahrzeugs auffallend ist.

Eine gängige Geräuschdämpfungsmaßnahme im Bereich der Lenksysteme sieht vor, die Lenksäule und insbesondere das Lenkgetriebe in Silentbuchsen zu lagern. Diese Lagerung verhindert die Übertragung von Geräuschen von der Lenkung auf die Karosserie. Dabei werden aber weder die Geräuschentwicklung an sich noch die Übertragung durch Luftschall verringert. Es werden auch Teile der Lenkung ausgeschäumt oder mit Dämmmaterialien versehen. Diese Maßnahmen sind aufwändig und führen zu erhöhtem Gewicht und erhöhten Kosten.

Ein gattungsgemäßes Lenksystem ist aus der US2007/0205041 A1 bekannt.

Es ist deshalb Aufgabe der vorliegenden Erfindung, ein Lenksystem zu schaffen, dessen Geräuschentwicklung im Betrieb gegenüber dem Kraftfahrzeuginnenraum auf einfache Weise gedämpft ist.

Diese Aufgabe wird von einem Lenksystem mit den Merkmalen des Anspruchs 1 gelöst. Bevorzugte Ausführungen der Erfindung sind in den Merkmalen der abhängigen Ansprüche aufgeführt.

Nachfolgend werden Ausführungsbeispiele der vorliegenden Erfindung anhand der Zeichnung näher beschrieben. Es zeigen:
- Fig. 1:: ein elektromotorisch unterstütztes Lenksystem mit einer verstellbaren Lenksäule;
- Fig. 2:: einen Querschnitt durch einen elektrischen Servoantrieb senkrecht zur Lenksäule;
- Fig. 3:: den Antrieb aus Figur 2 in einem Längsschnitt durch den Elektromotor;
- Fig. 4:: einen elektrischen Servomotor mit internem Untersetzungsgetriebe zur Verwendung in einem elektrischen Lenksystem;
- Fig. 5:: den Elektromotor aus Figur 4 in einem Längsschnitt mit getrenntem Motor- und Getriebeteil;
- Fig. 6:: den Elektromotor aus Figur 5 in einer perspektivischen Darstellung;
- Fig. 7:: ein elektrisch unterstütztes Lenkgetriebe mit einem parallel zur Zahnstange angeordeneten Servomotor;
- Fig. 8:: einen Längsschnitt durch ein Kugelumlaufgetriebe einer elektrischen Servolenkung;
- Fig. 9:: eine perspektivische Schnittdarstellung des Elektromotors aus Figur 7;
- Fig. 10:: eine elektrisch verstellbare Lenksäule mit erfindungsgemässem Verstellmotor; sowie
- Fig. 11:: ein weiteres Beispiel für eine elektrisch verstellbare Lenksäule mit erfindungsgemässem Elektromotor und Halteblech.

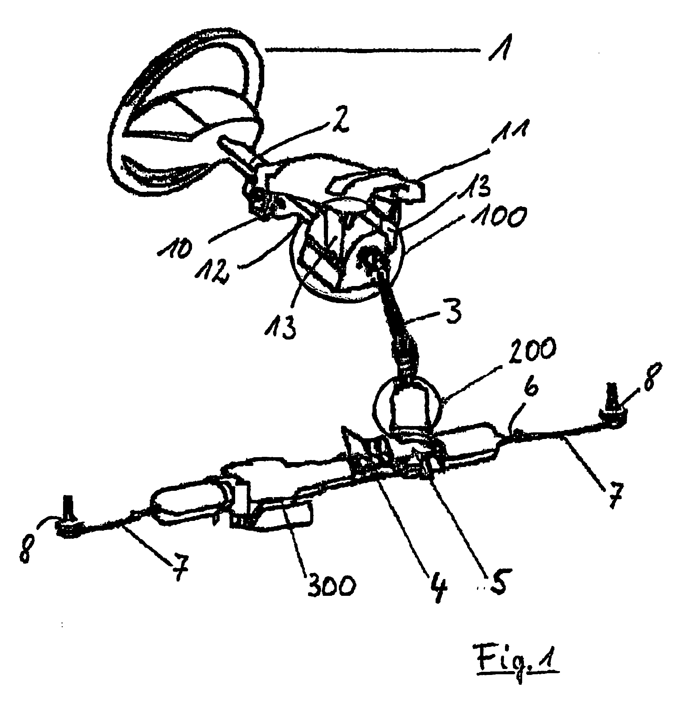

In der Fig. 1 ist ein Lenksystem dargestellt, in dem ein Lenkrad 1.über eine obere Lenkwelle 2 und eine untere Lenkwelle 3 mit einem Lenkgetriebe 4 verbunden ist. Das Lenkgetriebe 4 ist als Zahnstangenlenkung ausgeführt, bei der ein Ritzel der unteren Lenkwelle 3 in einem Eingriffsbereich 5 mit einer in dem Gehäuse 4 längsverschieblichen Zahnstange 6 kämmt. Die Zahnstande 6 wiederum ist mit zwei Spurstangen 7 verbunden, die über Kugelköpfe 8 die lenkbaren Räder einer Fahrzeugvorderachse betätigen.

Das Lenksystem ist mit einer verstellbaren Lenksäule 10 versehen, die gegenüber der Fahrzeugkarosserie in einer Konsole 11 gelagert ist. Das Lenksystem ist in insofern fiktiv, als hier drei mögliche Positionen eines Servoantriebs oder auch eines Überlagerungsgetriebes bei Überlagerungslenkungen veranschaulicht sind. Die erste Position 100 zeigt einen möglichen Servoantrieb oder ein Überlagerungsgetriebe im Bereich der oberen Lenkwelle 2. Die Bezugsziffer 200 zeigt einen elektromotorischen Hilfsantrieb, der dem Ritzeleingriffsbereich 5 an dem Lenkgetriebe 4 zugeordnet ist. Die Bezugsziffer 300 schließlich zeigt eine Position, an der ein elektrischer Hilfsantrieb mit direkter Anbindung an die Zahnstange angeordnet sein kann, zum Beispiel als Hohlwellenmotor, der koaxial zu der Zahnstange angeordnet ist, oder als seitlich beabstandeter Motor, der über einen Zahnriementrieb die Zahnstange antreibt. In beiden Fällen ist für die Umsetzung der Drehbewegung in eine Linearbewegung ein Kugelumlaufgetriebe vorteilhaft.

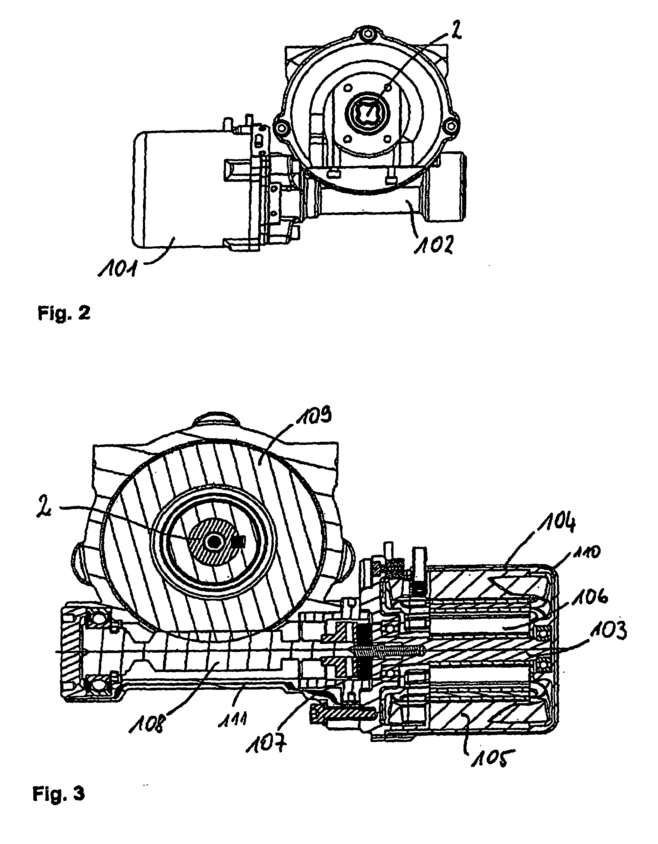

Die Fig. 2 zeigt einen Elektromotor 101 mit einem Schneckenradgetriebe 102, das auf die obere Lenkwelle 2 oder auf die untere Lenkwelle 3 wirken kann.

Die Fig. 3 zeigt den Elektromotor aus Fig. 2 in einem Längsschnitt entlang einer Motorwelle 103. Der Motor weist ein topfförmiges Gehäuse 104 auf, in dem das Statorpaket 105 angeordnet ist. Ein Rotor 106 ist drehfest mit der kugelgelagerten Motorwelle 103 verbunden. Eine elastische Kupplung 107 treibt eine ebenfalls kugelgelagerte Schneckenwelle 108 an. Die Schneckenwelle 108 kämmt mit einem Schneckenrad 109, das drehfest auf der oberen Lenkwelle 2 angeordnet ist. Eine Bestromung des Elektromotors 101 führt folglich zu einer Drehung der oberen Lenkwelle 2 in die eine oder die andere Richtung.

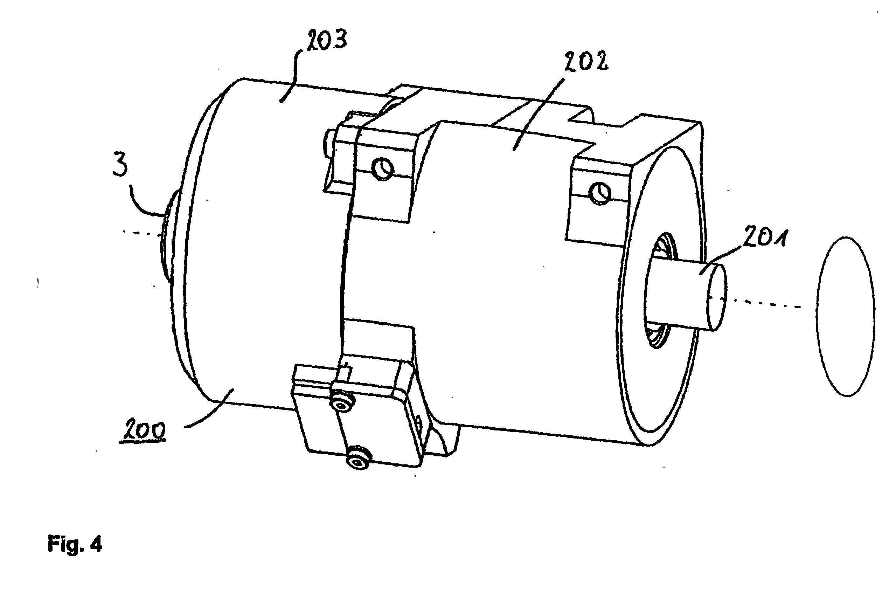

Die Fig. 4 zeigt einen elektrischen Hilfskraftmotor 200 mit einem angesetzten Getriebe in einer perspektivischen Darstellung. Der Elektromotor 200 ist als Einheit mit einer koaxialen Eingangswelle 3 und einer Ausgangswelle 201 versehen, wobei die Ausgangswelle 201 mit dem Ritzel im Bereich 5 aus Fig. 1 verbunden oder einstückig ausgebildet sein kann. Der Motor 200 weist einen Elektromotorteil 202 und einen Getriebeteil 203 auf, die zu einer baulichen Einheit verbunden sind. Der Hilfsantrieb ist zum Einbau in der Fig. 1 mit 200 bezeichneten Position vorgesehen.

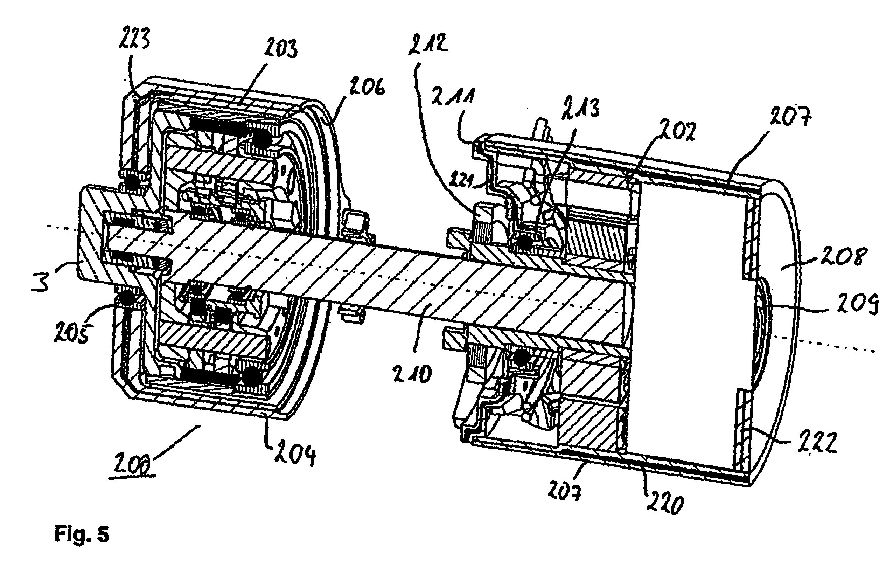

Die Fig. 5 zeigt den Antrieb aus Fig. 4 in einer auseinandergezogenen Darstellung in einem Längsschnitt. Der Getriebeteil 203 ist einem äußeren Gehäuse 204 gelagert, das an der dem Motor 202 abgewandten Seite eine Stirnfläche mit koaxialer Bohrung für ein Kugellager 205 der unteren Lenkwelle 3 aufweist. An die Stirnfläche schließt ein zylindrischer Bereich an, der mit einem Pfalz 206 zur Montage des Elektromotors 202 eingerichtet ist. Der Elektromotor 202 wiederum weist ein im Wesentlichen zylindrisches, hülsenförmiges Gehäuse 207 auf, das an der dem Getriebe 203 abgewandten Seite durch einen Gehäusedeckel 208 verschlossen ist. Der Gehäusedeckel 208 trägt ein mittig angeordnetes Kugellager 209 für die mit dem Lenkritzel in Verbindung stehende Welle 210. An dem dem Getriebe 203 zugewandten Ende ist das zylindrische Gehäuse 207 mit einem Deckel 211 verschlossen, der als Tiefziehteil ausgebildet sein kann und der eine Gestaltung aufweist, die einerseits mit dem Pfalz 206 kompatibel ist und die andererseits im Innern Raum für eine Kupplung 212 und ein weiteres Wälzlager 213 bereitstellt.

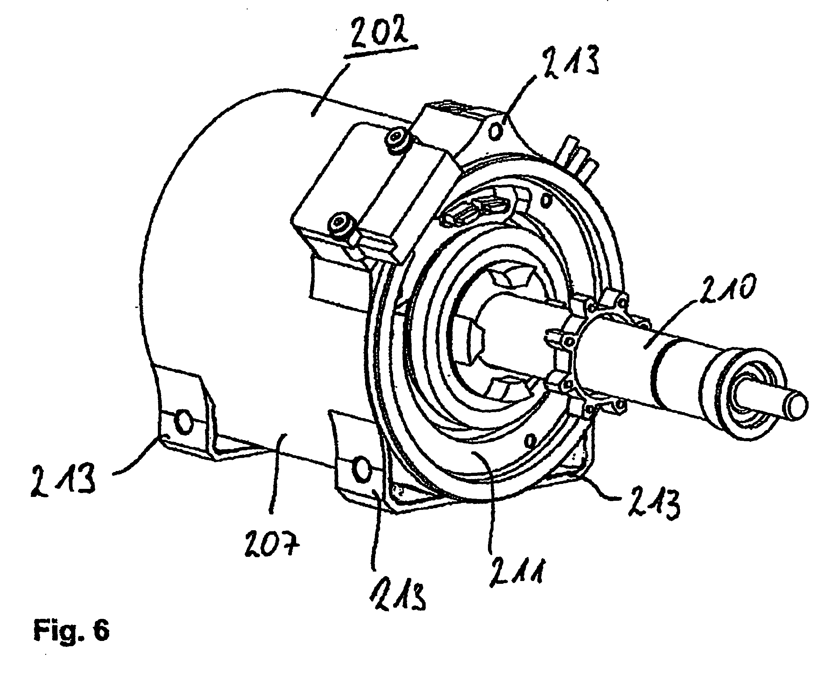

Die Fig. 6 zeigt den Motorteil 202 in einer anderen perspektivischen Darstellung. Das Motorgehäuse 207 weist Sockel 213 auf, die zur Befestigung des Elektromotors 203 an dem Lenkgetriebe 4 oder an einem Chassis eines Kraftfahrzeugs vorgesehen sind. Die Sockel 213 können als Blechformteil in Form eines Bügels ausgebildet sein, der an das Motorgehäuse 207 angeklebt oder angeschweißt ist.

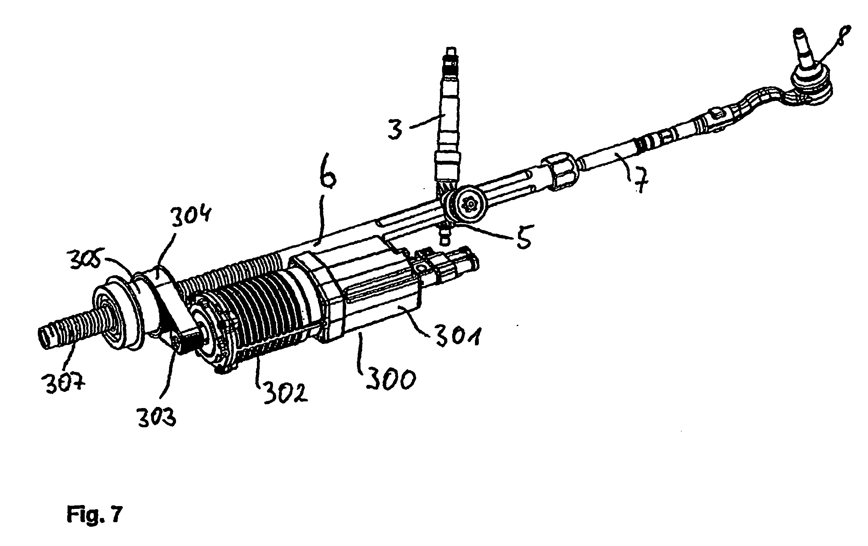

Die Fig. 7 veranschaulicht die Anordnung eines elektrischen Servoantriebs 300 in einer parallel zu der Zahnstange 4 angeordneten Position. Der Elektromotor 300 weist ein Motorteil 301 und ein Getriebeteil 302 auf, deren elektrische und mechanische Komponenten in Gehäusen auch Blechformteilen angeordnet sind. Der Servoantrieb 300 treibt über ein Ritzel 303 und einen Zahnriemen 304 einen Kugelumlauf 305 an, der wiederum über ein Kugelgewinde 307 die Zahnstange 6 in dem nicht dargestelltem Lenkungsgehäuse in Längsrichtung der Zahnstange verlagert.

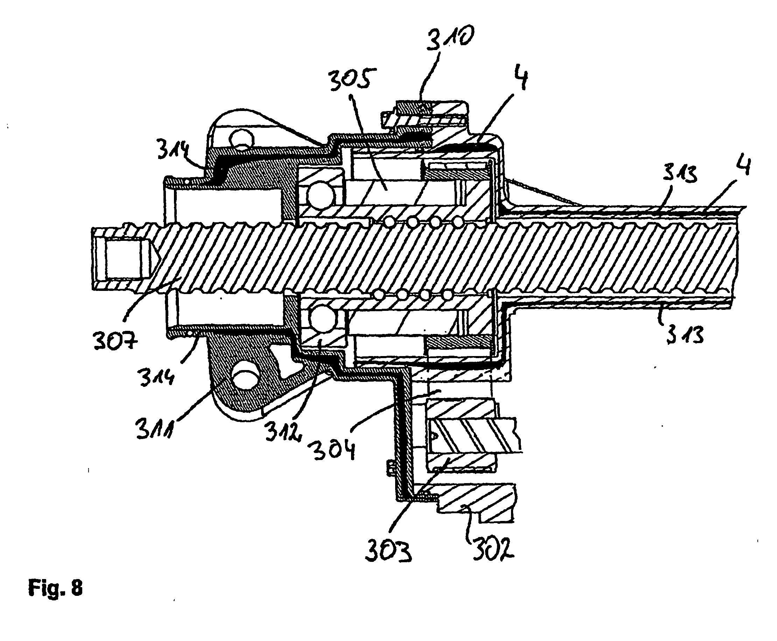

Der Kugelumlauf 305 ist in der Fig. 8 in einem Längsschnitt näher dargestellt. Die Bezugsziffern kennzeichnen die in Zusammenhang mit Fig. 7 bereits beschriebenen Komponenten. In dieser Darstellung ist das Lenkungsgehäuse 4 dargestellt, das als dünnwandiges Bauteil ausgeführt ist und das stirnseitig einen Flansch 310 zur Befestigung eines Gehäusedeckels 311 aufweist. Der Gehäusedeckel 311 ist gleichzeitig als Lagersitz für ein Wälzlager 312 des Kugelgewindetriebs 305 ausgebildet. Das Getriebegehäuse 302 ist einerseits an den Gehäusedeckel 311 angesetzt, andererseits (nicht dargestellt) an das Lenkungsgehäuse 4.

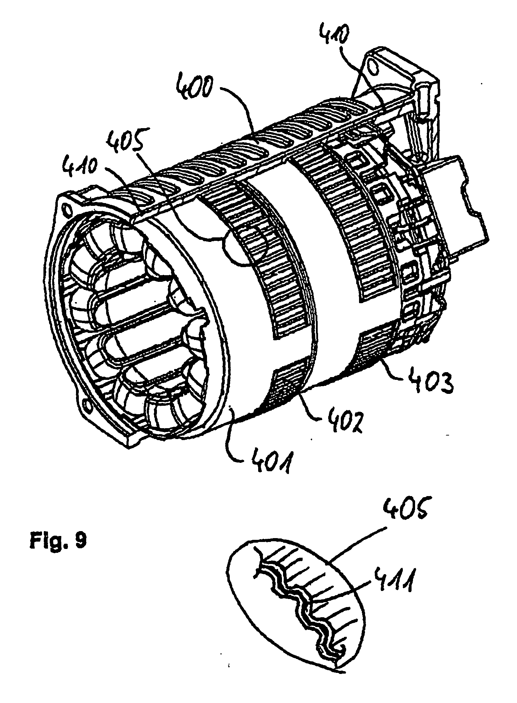

Die Fig. 9 zeigt schließlich in einem perspektivischen teilweisen Schnitt ein Elektromotorgehäuse 400, in das ein Statorpaket 401 eingesetzt ist. Zur Fixierung des Statorpakets 401 in dem Motorgehäuse 400 sind zwei Ringe 402 und 403 vorgesehen. Die Ringe weisen in Umfangsrichtung einen gewellten Querschnitt auf. Beim Einsetzen des Statorpakets 401 in das Gehäuse 400 liegen die radial äußeren Oberflächenbereiche der Ringe 402 und 403 an der Innenwandung des Motorgehäuses 400 an, während die radial innenliegenden Bereiche der Ringe 402 und 403 an dem Statorpaket 401 anliegen. Der Außendurchmesser des Statorpakets 401 ist kleiner als der Innendurchmesser der Motorgehäuses 400, sodass kein unmittelbarer mechanischer Kontakt zwischen dem Gehäuse 400 und dem Statorpaket 401 besteht.

Ein Detail 405 veranschaulicht den Querschnitt durch den Ring 402 in Fig. 9.

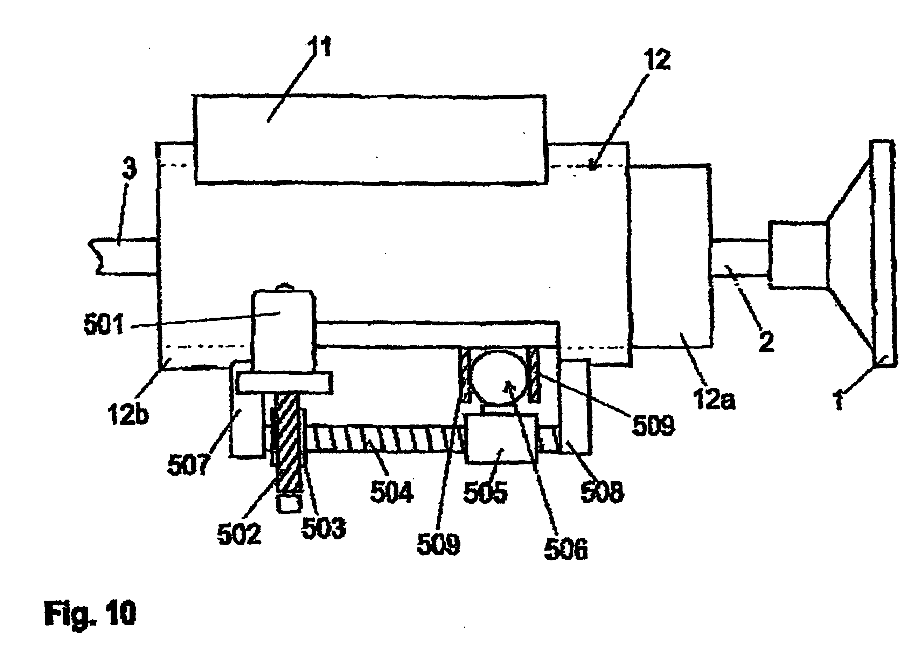

In der Fig. 10 ist eine elektrisch verstellbare Lenksäule dargestellt, bei der das Lenkrad mittels eines Verstellmotors 501, in seiner Position entlang der Längsachse der Lenkwelle 2, verschoben werden kann. Hierzu wird die elektromotorische Kraft des Elektromotors 501 über eine Getriebeverbindung, bestehend aus einem Schneckenrad 502 und einem Zahnrad 503 in eine Schraubwelle 504, übertragen. Über eine Gewindemutter 505 wird diese Schraubbewegung in eine Translationsbewegung umgewandelt, die über eine Mitnehmereinheit 506, auf das obere Mantelrohr 12a übertragen wird. Durch die Abstützung des Elektromotors an der unteren, karosserieseitigen Manteleinheit 12b wird damit eine Längenverstellung zwischen der oberen Manteleinheit 12a und der unteren Manteleinheit 12b ermöglicht. Die obere Manteleinheit 12a lagert drehbar die Lenkwelle 2, an der das Lenkrad 1 befestigt ist.

Gemäß der erfindungsgemäßen Ausführung ist das Gehäuse des Elektromotors 501 aus einem Verbundwerkstoff gebildet, der aus einem mehrschichtigen sandwichartigen Blech besteht, bei dem zwischen zwei metallischen Schichten, eine Schicht aus einem Elastomer oder einem viskoelastischen Material vorgesehen ist, wie dies bei den anderen Ausführungsformen der Erfindung bereits erläutert wurde. Weiterhin sind mit Vorteil die Abstützeinrichtungen 507 und 508 ebenfalls aus diesem Verbundwerkstoff hergestellt. In vorteilhafter Weise kann die Geräuschdämmung und/oder die Geräuschdämpfung weiter erhöht werden, indem die Aufnahme 509 der Mitnehmereinrichtung 506, ebenfalls aus diesem Verbundwerkstoff hergestellt ist. Auf diese Weise wird erreicht, dass die gesamte Vibrationsübertragung vom Elektromotor auf die untere, karosseriefeste Manteleinheit 12b und auf die obere, bewegliche Manteleinheit 12a gedämpft beziehungsweise gedämmt wird.

Die Anwendung kann auch auf höhenverstellbare Lenksäulen erfolgen, wenn beispielsweise die untere Manteleinheit 12b in einer Halteeinrichtung, die hier nicht dargestellt ist, schwenkbar gegenüber der Karosserie befestigt ist.

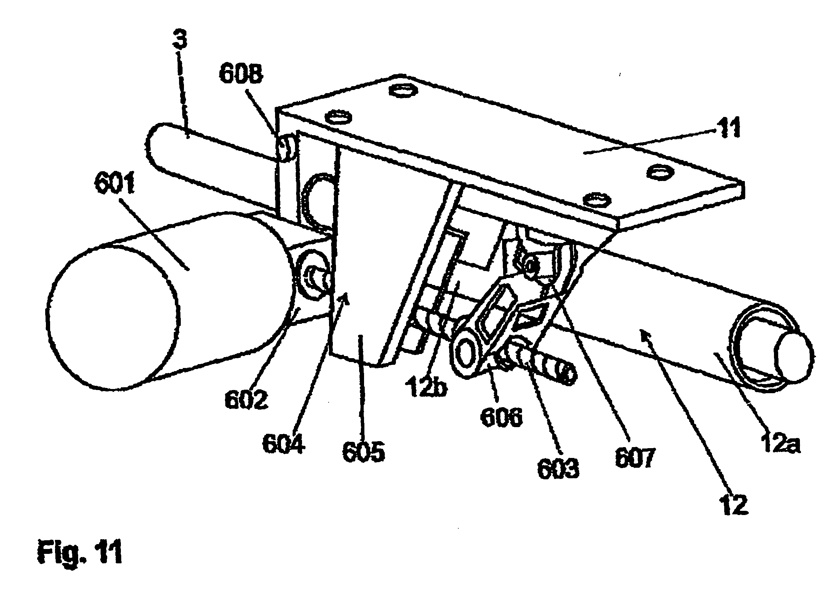

In der Fig. 11 ist eine weitere Ausführungsform der Erfindung für eine elektrisch, längenverstellbare Lenksäule dargestellt. Auch hier wird vergleichbar zur Lösung entsprechend Fig. 10 eine obere Manteleinheit 12a, hier als Rohr ausgebildet, gegenüber einer unteren Manteleinheit 12b, ebenfalls als Rohr ausgeführt, in Längsrichtung der Lenkspindel 2 durch den elektrischen Verstellmechanismus verschoben. Der elektrische Verstellmechanismus, der an der Karosserie abgestützt ist, besteht aus einem Elektromotor 601, der über ein Getriebe 602, seine Drehbewegung auf die Drehbewegung einer Verstellspindel 603 überträgt. Die Verstellspindel 603 wird in einer Abstützung 604 abgestützt, die ein Halteblech 605 umfasst. Die Drehbewegung wird über eine Gewindemutter 606 in eine Translationsbewegung umgewandelt. Die Translationsbewegung wird über ein Koppelglied 607 auf die Manteleinheit übertragen. Hierbei ist es denkbar und möglich, durch eine entsprechende Kinematik gleichzeitig mit der Verstellung in Längsrichtung der Lenkspindel 12 auch eine Verschwenkung gegenüber dieser Längsrichtung um den Drehpunkt 608 zu erreichen. Im Stand der Technik sind eine Reihe verschiedenartiger derartiger elektrisch ansteuerbarer Verstellsysteme für Lenksäulen bekannt, so dass hier darauf verzichtet werden kann, detaillierte Konstruktionsmerkmale derartiger Einrichtungen anzugeben.

Erfindungsgemäß ist es vorgesehen, einzelne oder alle der folgenden Elemente aus dem Verbundwerkstoff, wie er bereits beschrieben wurde, herzustellen:
Das Gehäuse des Elektromotors 601, das Halteblech 605 der Halteeinrichtung 604, die Anbindungselemente zur Befestigung des Mitnehmers 607 an der Manteleinheit. Wie bereits allgemein ausgeführt, ist es weiter zu bevorzugen, die Haltekonsole 11 mit der die Lenksäule im Fahrzeug befestigt wird, ebenfalls aus diesem Verbundwerkstoff herzustellen.

Bei den insoweit beschriebenen Komponenten, die im Wesentlichen aus dem Stand der Technik bekannt sind, sind zahlreiche Geräuschquellen vorhanden, die im Betrieb Körperschall und Luftschall erzeugen.

Erfindungsgemäß werden diese Geräuschquellen durch Verwendung eines Verbundwerkstoffs an verschiedenen Stellen gedämmt und/oder gedämpft. Der Verbundwerkstoff ist dabei ein mehrschichtiges sandwichartiges Blech, bei dem zwischen zwei metallischen Schichten eine Schicht aus einem Elastomer oder aus einem viskoelastischen Material vorgesehen ist. Die beiden metallischen Deckschichten können aus Stahl oder einem Leichtmetall gefertigt sein, vorzugsweise mit Wandstärken im Bereich von 0,3 bis 1 mm. Die dazwischen liegende Dämmschicht kann ebenfalls im Bereich von 0,3 bis 1 mm Dicke aufweisen. Dieser Verbundwerkstoff kann tafelförmig oder bandförmig vorliegen und im Wesentlichen wie konventionelles Stahlblech verarbeitet werden. Es kann insbesondere auch gestanzt, gebohrt und tiefgezogen werden. Verbindungen dieses Blechs mit anderen mechanischen Komponenten erfolgen vorzugsweise durch Kleben.

Nachfolgend wird näher beschrieben, wo das Blech in den Komponenten der Fig. 1 bis 11 zur Geräuschdämmung eingesetzt wird.

In der Fig. 1 kann die Konsole 11 der Lenksäule 10 aus dem oben beschriebenen Verbundmaterial gefertigt werden, beispielsweise im Tiefziehverfahren. Das Teil kann auch gepresst werden. Die obere Lenkwelle 2 läuft in einem Mantelrohr 12, das aus dem Verbundblech gefertigt sein kann. Weiter hängt die Lenksäule 10 an Laschen 13, die ebenfalls aus den Verbundmaterial gefertigt sein können. Die weiter unten dargestellten Komponenten können auch durch Einsatz des Verbundmaterials geräuschgedämmt und/oder -gedämpft werden. Bei dem Servomotor 200 kann das Gehäuse als Topf tiefgezogen oder auch gerollt sein. Das Gehäuse des Servomotors 300 kann aus dem Verbundmaterial hergestellt sein. Schließlich kann das gesamte Lenkungsgehäuse 4 auch aus dem Verbundmaterial gefertigt werden. Dies wird nachfolgend noch näher erläutert.

In den Fig. 2 und 3 ist das topfförmige Motorgehäuse 104 aus dem Verbundmaterial hergestellt, was durch die Polymerschicht 110 veranschaulicht ist. Gleiches gilt für das Gehäuse 111, in dem die Schneckenwelle 108 gelagert ist.

Bei dem Ausführungsbeispiel aus den Fig. 4, 5 und 6 kann vor allem das hülsenförmige Motorgehäuse 207 aus dem Verbundmaterial gefertigt sein, sodass die Geräuschentwicklung des Motors nach außen hin gedämmt und/oder gedämpft ist. Das Gehäuse 207 weist zu diesem Zweck eine in den Blechmantel eingelagerte Polymerschicht oder viskoelastische Schicht 220 auf. In ähnlicher Weise ist der Deckel 211 aus dem Verbundmaterial gefertigt. Dort ist eine Polymerschicht 221 eingebracht. Der stirnseitige Deckel 208 kann zur Vervollständigung der Geräuschisolation ebenfalls aus dem beschriebenen Verbundmaterial gefertigt sein. Die Dämmschicht ist hier mit 222 bezeichnet.

Der Getriebeteil 203 in der Fig. 5 ist mit einem topfförmigen Gehäuse aus geräuschdämmenden und/oder -dämpfenden Verbundmaterial versehen. Das Verbundmaterial weist hier eine viskoelastische oder elastomerische Zwischenschicht 223 auf.

Eine Körperschalldämpfung, die beim Betrieb des Servoantriebs aus den Fig. 4 bis 6 erforderlich ist, kann über die Sockel 213 erfolgen. Die Sockel 213 sind an der Unterseite in Fig. 6 als Bügel ausgebildet und aus dem Verbundmaterial gefertigt. Die Bügel sind an das Gehäuse 202 des Elektromotors vorzugsweise angeklebt. Der oben angeordnete Sockel 213 kann als Formteil aus Blech gefertigt sein. Das Verbundmaterial bewirkt bei dieser Anordnung eine wirkungsvolle Unterdrückung vom Körperschall, der von dem Servomotor 202 auf das tragende Strukturteil, also das Chassis oder das Lenkgetriebe 4 übertragen werden könnte.

Wenn die Verschraubung der Sockel 213 aus Fig. 6 oder auch der Laschen 13 aus Fig. 1 mit der Karosserie in geeigneter Weise erfolgt, also ohne direkten metallischen Kontakt des geräuscherzeugenden Bauteils mit der tragenden Struktur, so kann auf Gummilagerungen, Silentblöcke und dergleichen verzichtet werden. Die Befestigung wird dadurch einfacher, preiswerter und steifer.

Weitere Beipiele für die erfindungsgemäße geräuschdämmende und/oder -dämpfende Ausführung von Lenksystemen sind in den Fig. 7 bis 9 veranschaulicht. In der Fig. 7 kann das Gehäuse des Elektromotors 301, das Getriebegehäuse 302 und/oder die rohrförmige Kugelmutter 305 aus dem Verbundmaterial gefertigt werden. Insbesondere ist bei Zahnstangenlenkungen ein Abschnitt zwischen dem Eingriffsbereich 5 des Ritzels mit der Zahnstange 6 üblicherweise ein rohrförmiges Lenkungsgehäuse 4 vorgesehen, das aus dem Verbundmaterial gefertigt ist. Der Gehäusedeckel 311 kann ebenfalls die viskoelastische Zwischenschicht aufweisen. Die Schichten sind hier mit 313 und 314 bezeichnet.

In der Fig. 9 ist schließlich vorgesehen, das Gehäuse 400 des dargestellten Elektromotors aus dem Verbundmaterial zu fertigen. Dafür ist in dem hülsenförmigen Gehäuse eine Dämmschicht 410 vorgesehen, die die innere Gehäusewandung und die äußere Gehäusewandung akustisch trennt. Eine weitere Entkopplungsmöglichkeit bieten die Toleranzringe 405, die aus Verbundmaterial mit einer dazwischen liegenden viskoelastischen Dämmschicht 411 gefertigt sind.

Schließlich ist bei dem Motor aus Fig. 9 vorgesehen, die Statorbleche aus dem Verbundmaterial zu fertigen. In ähnlicher Weise können auch Blechpakete des nicht dargestellten Rotors aus dem Verbundmaterial hergestellt werden.

Das Verbundmaterial, das eingangs beschrieben worden ist, lässt sich in geeigneter Weise bearbeiten, um die beschriebenen Komponenten fertigen zu können. Es lässt sich umformen, wobei darauf zu achten ist, dass die Zwischenschicht nicht verdrängt wird. Das Material lässt sich biegen, strecken, bohren und stanzen. Beim Umformen kann das Material unmittelbar so geformt werden, dass ein geeigneter Lagersitz entsteht wie zum Beispiel in der Fig. 8 für das Wälzlager 312 oder in der Fig. 5 für die Wälzlager 205 und 209. Ein Vorteil bei der Verwendung des Verbundmaterials für die verschiedenen Komponenten eines Lenksystems besteht auch darin, dass auf weitere Schalldämmmaßnahmen wie Ausschäumen oder den Einsatz zusätzlicher Dichtungen verzichtet werden kann. Dadurch ergibt sich zusätzlich eine Gewichtsreduktion. Die an sich schwereren Gussgehäuse, die bei Lenksystemen bislang Einsatz finden, wurden trotz technologischer Möglichkeit bislang nicht oder nur selten durch Blechgehäuse ersetzt, weil Blechgehäuse eine höhere Schallemission erwarten lassen. Die Verwendung des Verbundmaterials hebt diesen Nachteil auf, sodass nun auch Lenkungsgehäuse oder Teile davon aus dem blechartigen Verbundmaterial gefertigt werden können und auf Gussgehäuse verzichtet werden kann.

Bei der Auslegung der aus Verbundmaterial zu fertigenden Bauteile ist darauf zu achten, dass das Verbundmaterial möglichst die gesamte Schallquelle umgibt, also beispielsweise einen Elektromotor, eine Hydraulikpumpe, eine Lagerschale oder ein schnelldrehendes Zahnrad, sodass zu den übrigen Komponenten und umgebenden Karosserieteilen nach Möglichkeit keine rein metallische Verbindung besteht.

In einer besonderen Weiterbildung der Erfindung wird als Zwischenschicht zwischen den zwei metallischen Schichten des Verbundwerkstoffes eine Schicht aus einem elektroaktiven Polymer verwendet. Diese Schicht reagiert auf elektrische und/oder magnetische Felder und ist ganz besonders zur Kapselung von Elektromotoren oder zur Verwendung von Blechpaketen für Statoren und Rotoren im Elektromotor geeignet. Durch eine entsprechende Auslegung mittels Schichtdicke und/oder Anteil an elektroaktiven Elementen in der Polymerschicht kann das Frequenzverhalten gezielt angesteuert werden. Auf diese Weise ist es möglich eine besonders gute Dämpfungs- und/oder Dämmungsfunktion für bestimmte kritische Frequenzen zu erreichen.

## Patentansprüche

1. Lenksystem für ein Kraftfahrzeug umfassend
ein Lenkrad (1),
eine obere Lenkwelle (2),
eine untere Lenkwelle (3) und
einen Elektroantrieb (100, 200, 300, 501, 601),
wobei die obere Lenkwelle (2) in einer Manteleinheit (12) drehbar gelagert gehalten ist, sowie
der Elektroantrieb direkt oder indirekt mit einer Fahrzeugkarosserie verbindbar ist, **dadurch gekennzeichnet, dass** wenigstens ein Gehäuseteil und/oder ein Halteteil aus einem als Verbundwerkstoff ausgeführten Blech gefertigt ist, wobei der Verbundwerkstoff eine erste metallische Schicht und eine zweite metallische Schicht aufweist, zwischen denen eine Schicht aus einem viskoelastischen Stoff oder einem Elastomer angeordnet ist.

2. Lenksystem nach Anspruch 1, **dadurch gekennzeichnet, dass** die Lenksäule eine Konsole (11) aufweist, die aus dem Verbundmaterial gefertigt ist.

3. Lenksystem nach einem der vorhergehenden Ansprüche, **dadurch gekennzeichnet, dass** das Motorgehäuse (104, 207, 208, 400) aus dem Verbundwerkstoff gefertigt ist.

4. Lenksystem nach einem der vorhergehenden Ansprüche, **dadurch gekennzeichnet, dass** ein Statorpaket (401) mittels aus Verbundwerkstoff gefertigten Toleranzringen (402, 403) in dem Motorgehäuse (400) befestigt ist.

5. Lenksystem nach einem der vorhergehenden Ansprüche, **dadurch gekennzeichnet, dass** die Lenksäule (10) über aus Verbundwerkstoff gefertigte Laschen (13) an der Konsole (11) befestigt ist.

6. Lenksystem nach einem der vorhergehenden Ansprüche, **dadurch gekennzeichnet, dass** die obere Lenkwelle (2) in einem aus Verbundmaterial gefertigten Mantelrohr (12) angeordnet ist.

7. Lenksystem nach einem der vorhergehenden Ansprüche, **dadurch gekennzeichnet, dass** der Elektroantrieb (100, 200, 300, 501, 601) ein Antrieb für eine axial und/oder vertikal verstellbare Lenksäule ist.

8. Lenksystem nach einem der vorhergehenden Ansprüche, **dadurch gekennzeichnet, dass** der Elektroantrieb (100, 200, 300, 501, 601) ein Antrieb für eine Servolenkung ist.

9. Lenksystem nach einem der vorhergehenden Ansprüche, **dadurch gekennzeichnet, dass** der Elektroantrieb (100, 200, 300, 501, 601) ein Antrieb für eine Überlagerungslenkung ist

10. Lenksystem nach einem der vorhergehenden Ansprüche, **dadurch gekennzeichnet, dass** der Servomotor oder dass der Überlagerungsantrieb auf Sockeln (213) angeordnet ist, die aus Verbundmaterial gefertigt sind.

## Claims

1. Steering system for a motor vehicle, comprising a steering wheel (1), an upper steering shaft (2), a lower steering shaft (3) and an electric drive (100, 200, 300, 501, 601), wherein the upper steering shaft (2) is held pivot-mounted in a casing unit (12) and the electric drive can be directly or indirectly joined to a vehicle body, **characterised in that** at least one housing part and/or one holding part is made of metal sheet implemented as a composite material, wherein the composite material has a first metal layer and a second metal layer, between which a layer consisting of a viscoelastic material or an elastomer is arranged.

2. Steering system according to Claim 1, **characterised in that** the steering column has a console (11) which is made of the composite material.

3. Steering system according to any one of the preceding claims, **characterised in that** the motor housing (104, 207, 208, 400) is made of the composite material.

4. Steering system according to any one of the preceding claims, **characterised in that** a stator assembly (401) is fastened in the motor housing (400) by means of tolerance rings (402, 403) made of composite material.

5. Steering system according to any one of the preceding claims, **characterised in that** the steering column (10) is fastened to the console (11) via brackets (13) made of composite material.

6. Steering system according to any one of the preceding claims, **characterised in that** the upper steering shaft (2) is arranged in a casing tube (12) made of composite material.

7. Steering system according to any one of the preceding claims, **characterised in that** the electric drive (100, 200, 300, 501, 601) is a drive for an axially and/or vertically adjustable steering column.

8. Steering system according to any one of the preceding claims, **characterised in that** the electric drive (100, 200, 300, 501, 601) is a drive for a power-assisted steering system.

9. Steering system according to any one of the preceding claims, **characterised in that** the electric drive (100, 200, 300, 501, 601) is a drive for a superposition steering system.

10. Steering system according to any one of the preceding claims, **characterised in that** the servo motor or the superposition drive is arranged on supports (213) which are made of composite material.

## Revendications

1. Système de direction pour un véhicule automobile, comprenant
un volant de direction (1),
un arbre de direction supérieur (2),
un arbre de direction inférieur (3), et
un moyen d'entraînement électrique (100, 200, 300, 501, 601),
l'arbre de direction supérieur (2) étant supporté par un montage en rotation dans une unité d'enveloppe (12), et le moyen d'entraînement électrique pouvant être relié directement ou indirectement à une carrosserie du véhicule,
**caractérisé en ce qu'**au moins une pièce de carter et/ou une pièce de support est fabriquée en une tôle réalisée sous forme de matériau composite, le matériau composite présentant une première couche métallique et une deuxième couche métallique, entre lesquelles est agencée une couche en une matière viscoélastique ou en un élastomère.

2. Système de direction selon la revendication 1, **caractérisé en ce que** la colonne de direction présente une console (11) qui est fabriquée en ledit matériau composite.

3. Système de direction selon l'une des revendications précédentes, **caractérisé en ce que** le carter de moteur (104, 207, 208, 400) est fabriqué en ledit matériau composite.

4. Système de direction selon l'une des revendications précédentes, **caractérisé en ce qu'**un empilement de stator (401) est fixé dans le carter de moteur (400) au moyen d'anneaux de tolérances (402, 403) fabriqués en matériau composite.

5. Système de direction selon l'une des revendications précédentes, **caractérisé en ce que** la colonne de direction (10) est fixée à la console (11) par l'intermédiaire de pattes (13) fabriquées en matériau composite.

6. Système de direction selon l'une des revendications précédentes, **caractérisé en ce que** l'arbre de direction supérieur (2) est agencé dans un tube d'enveloppe (12) fabriqué en matériau composite.

7. Système de direction selon l'une des revendications précédentes, **caractérisé en ce que** le moyen d'entraînement électrique (100, 200, 300, 501, 601) est un moyen d'entraînement pour une colonne de direction réglable axialement et/ou verticalement.

8. Système de direction selon l'une des revendications précédentes, **caractérisé en ce que** le moyen d'entraînement électrique (100, 200, 300, 501, 601) est un moyen d'entraînement pour une direction assistée.

9. Système de direction selon l'une des revendications précédentes, **caractérisé en ce que** le moyen d'entraînement électrique (100, 200, 300, 501, 601) est un moyen d'entraînement pour une direction à réducteur de superposition.

10. Système de direction selon l'une des revendications précédentes, **caractérisé en ce que** le moteur d'assistance ou **en ce que** le moyen d'entraînement à réducteur de superposition est agencé sur des embases (213), qui sont fabriquées en matériau composite.
